# EUROPEAN PATENT SPECIFICATION

(11) **EP 0 299 055 B1**
(45) Date of publication and mention of the grant of the patent: **26.05.1993**
(21) Application number: 88901745.5
(22) Date of filing: 21.12.1987
(51) Int. Cl.: F16H 35/04, F16H 1/44

(54) **NUTATING GEAR POSITRACTION DIFFERENTIAL**
DIFFERENTIALGETRIEBE MIT TAUMELRÄDERN
DIFFERENTIEL EN NUTATION A POSITRACTION

(30) Priority: 30.12.1986 US 947801
(43) Date of publication of application: 18.01.1989
(73) Proprietor: FJ ENGINEERING, INC., Palo Alto, CA 94306 (US)
(72) Inventor: JOLLY, Frank H., Arcata, CA 95521 (US)
(74) Representative: Hitchcock, Esmond Antony
(86) International application number: US8703327
(87) International publication number: WO8805139

(56) References cited:
- FR-A- 2 374 568
- US-A- 1 716 073
- US-A- 1 730 183
- US-A- 1 934 721
- US-A- 2 700 310
- US-A- 3 532 005
- US-A- 3 548 683
- US-A- 3 977 275
- US-A- 4 291 591
- US-A- 4 449 442
- US-A- 4 665 769

## Description

### BACKGROUND OF INVENTION

Many structures are known for limited slip differentials, but they are complex and expensive devices. The following prior U. S. patents have been found in searches on the subject, but none provide a simple and inexpensive limited slip differential structure: 1,355,170; 1,483,606; 1,505,570; 1,515,916; 1,934,721; 2,859,641; 2,923,174; 3,548,683; 3,581,597; 3,686,976; 3,700,082; 3,732,750; 4,104,931; 4,400,996; 4,498,355; 4,507,984; 4,524,640; 4,554,845; 4.598,609 and 4,640,143.

French Patent 2374568 describes a limited slip differential for use with self-propelled wheeled vehicles comprising two pairs of gear members, the gears of one pair being larger than those of the other. The smaller gears are connected to the axles of a vehicle whilst the larger gears are connected to an internal driving mechanism. Each smaller gear meshes with a respective larger gear.

U.S. Patent 1934721 describes a torque differential comprising a driving shaft and a pair of driven axles. A carrier is connected to the driving shaft and drives a driving plate which is in turn connected to a pair of compensating rings, each of which is surrounded by an eccentric secured to a respective axle.

A limited slip differential in accordance with the invention comprises a driving member, two driven shafts, and a pair of nutating drive trains of which one connects the driving member to each driven shaft, each drive train having an input gear rotatable about the axis of the driven shaft and attached to the driving member, a cam, connected to the driven shaft and a nutating gear connected between the input gear and the cam, wherein each of the nutating drive trains has a first gear with a larger number of teeth and a second gear with a fewer number of teeth, the first gear of one drive train and the second gear of the other drive train nutate, and the nutating gears of the drive trains are rotatably interconnected to permit the nutating gears to nutate with respect to each other when the shafts rotate in opposite directions.

This provides a positraction or non-slip differential that allows two shafts or wheels to rotate at different speeds (one faster and the other slower than the differential case). The difference in speed for each shaft with respect to the case is allowed only when the wheel or shaft needs to rotate more slowly or faster than the case speed. The differential is constructed of two cam operated nutating gear sets. Each axle or shaft is connected to the cams of the gear sets respectively. The differential will not allow one wheel to spin and steal torque from the other because each cam operated nutating gear set is asymmetric in transmitting torque; with the cam attached to the drive shaft and the gear connected to the case, torque from the shaft is able to rotate the gear with respect to the housing more easily than torque from the gear can cause rotation of the cam. In short, if a wheel loses traction its cam will immediately rotate at case speed. When one cam rotates at case speed with one-way drive through the cam-gear sets, the other cam must also rotate at case speed because torque can not flow backwards through the cam operated gear set.

The gear-cam sets may be designed with limited slip biasing, that is, partial ability to drive in both directions through each gear-cam set so that upon loss of load on one shaft, the entire torque of the housing is not transmitted to the remaining driven shaft thereby doubling the torque on the remaining driven shaft. This may be accomplished by differential positive torque transmission in the two directions through the gear-cam set by proper selection of gear ratio and cam ratio in relation to the frictional resistance of the gear-cam set.

The cam operated gear sets may use edge nutating gears, face nutating gears or elliptical nutation.

### BRIEF DESCRIPTION OF THE SEVERAL VIEWS OF THE DRAWINGS

Figure 1 is a longitudinal sectional view of the embodiment of a limited slip differential in accordance with the invention using face nutating gears;
Figure 2 is an exploded view of the differential of Fig. 1;
Figure 3 is a longitudinal sectional view of an alternative differential embodiment using edge nutating gears;
Figure 4 is a cross-sectional view of a the structure of Fig. 3 taken on the plane indicated at 4-4 in Fig. 3; and
Figure 5 is an exploded view of the structure of Fig 3.

### DETAILED DESCRIPTION

This invention is an improvement in the design of anti-spin differentials wherein two cam operated gear sets are used to transmit differential torque from the cams, but not in the reverse direction. The specific types of gear trains used are the face nutators, edge nutators, and the harmonic drives.

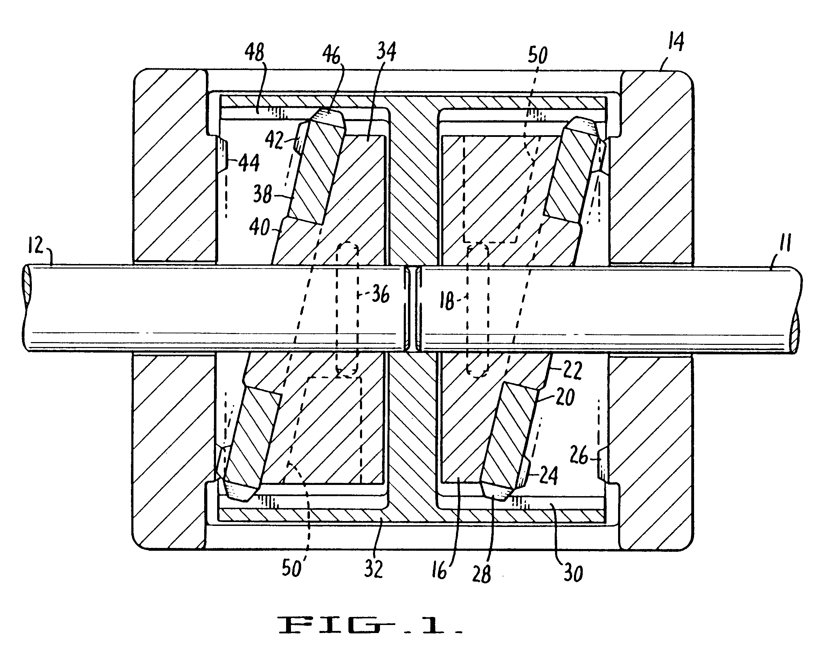

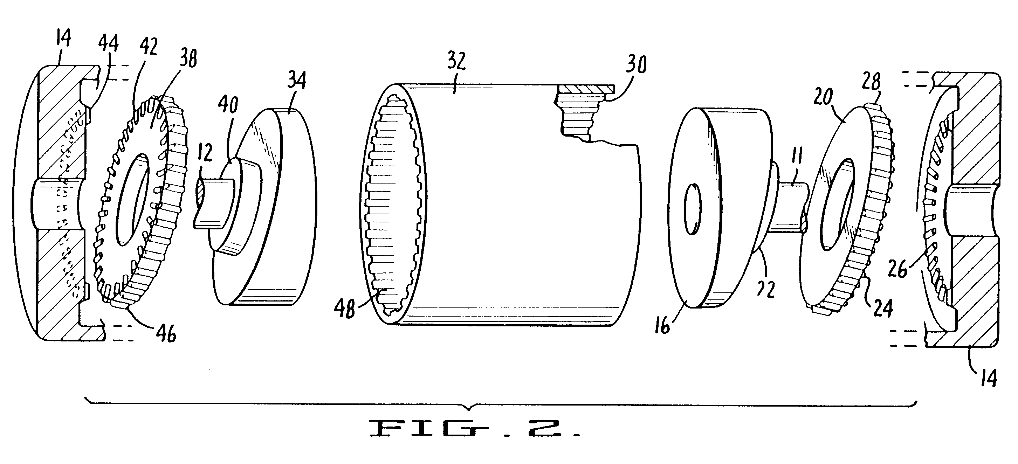

Referring now in detail to Figs. 1 and 2, a pair of shafts 11 and 12 are rotatably mounted in a differential housing 14 which may be rotated about the axis of the shafts by any suitable means such as a bevel gear. A pair of nutating drive trains connect the shafts to the housing.

The drive train for the shaft 11 includes a cam 16 connected to the shaft 11 by a pin 18, a nutating gear 20 mounted for rotation on a boss 22 on the cam 16 and carrying a set of face teeth 24 engaging a set of face teeth 26 on the inside of the case 14 with the nutating gear 20 also carrying a set of peripheral teeth 28 which engage a set of ring gear teeth 30 on the inside of a carrier 32.

The drive train for the shaft 12 includes a cam 34 connected to the shaft 12 by a pin 36, a nutating gear 38 mounted for rotation on a boss 40 on the cam 34 and carrying a set of face teeth 42 engaging a set of face teeth 44 on the inside of the case 14 with the nutating gear 38 also carrying a set of peripheral teeth 46 which engage a set of ring gear teeth 48 on the inside of the carrier 32.

Each of the cams 16 and 34 contains a recess 50 shaped to counterbalance each cam-gear set.

The teeth 28, 30, 46 and 48 function as a spline connection between the gears 20 and 38. The nutating gears 20 and 38 both have 30 teeth in the sets 24 and 42, but the teeth in the sets 26 and 44 on the inside of the case are different with 31 teeth in set 26 and 29 teeth in set 44. As a result, one revolution of the shaft 11 with respect to the case 14 will cause the nutating gear 20 to lag one thirtieth of a revolution with respect to the shaft 11, and one revolution of shaft 12 with respect to case 14 will cause the nutating gear 38 to lead one-thirtieth of a revolution with respect to the shaft 12.

With the nutating gears selected in this way, rotation of the shafts 11 and 12 causes equal rotation of the nutating gears 24 and 42, and the gears 24 and 42 rotate in the same direction with respect to the case 14 when the shafts 11 and 12 are rotating in opposite directions with respect to each other producing differential action. The rotation of the two shafts must be equal and opposite, because the two nutating gears 24 and 42 are forced to rotate in the same direction at the same speed by the spline connection through teeth 28, 30, 46 and 48 and rigid carrier 32.

If the load is removed from one shaft, for instance shaft 11, while the case 14 is driven, the resistance of the load on the other shaft 12 will try to drive the differential to spin shaft 11 in the opposite direction, but this counter-spinning will not happen because nutating gear 20, which is driven by teeth 30 cannot drive the shaft 11 to rotate with respect to the case 14 through the one to thirty speed-up drive of the gears 24 and 26 with the frictional drag of the interface between the cam 16 and the nutating gear 20.

It will be noted that it is possible to select the cam angle for cam 34 to exactly compensate for the difference in the circumferences of the sets of teeth 42 and 44, though this is not the case for the sets of teeth 24 and 26. Thus, the circumference of the set of teeth 44 is 29 times the pitch of the teeth, and the circumference of the set 42 is 30 times the pitch. The diameters of the two sets are the same, projected onto a plane perpendicular to the axis of shaft 12 if the cam angle is arc cosine 29/30, that is 14.8 degrees. This permits the boss 40 to be concentric with the axis of shaft 12 in the plane of the teeth 42. On the other hand the center of boss 22 is off-set from the axis of shaft 11 toward the side where teeth 24 and 26 engage.

If a wheel on either shaft 11 or 12 loses traction or comes off the driving surface, its gear train will lock up. If cam 16 stops relative to gear 20, gear 20 must stop relative to gear 26; no motion of either wheel can occur relative to case 14 and the entire differential will move as a unit; this characteristic is referred to as positraction.

If a cam is driving a gear of X+Y teeth meshed to a gear of X teeth, the driven gear will move in the same rotational direction as the cam. If a cam is driving a gear of X teeth meshed to a gear of X+Y teeth, the cammed gear of X teeth will move in the reversed rotation direction from the cam.

X can be any number of teeth. Y can be any number of teeth. If X is chosen to equal 10 and Y is chosen to equal 1, then the X gear has 10 teeth and the X+Y gear will have 11 teeth.

Cross mixing gears of different numbers of teeth allows shaft 11 to move in the reversed rotational direction relative to shaft 12.

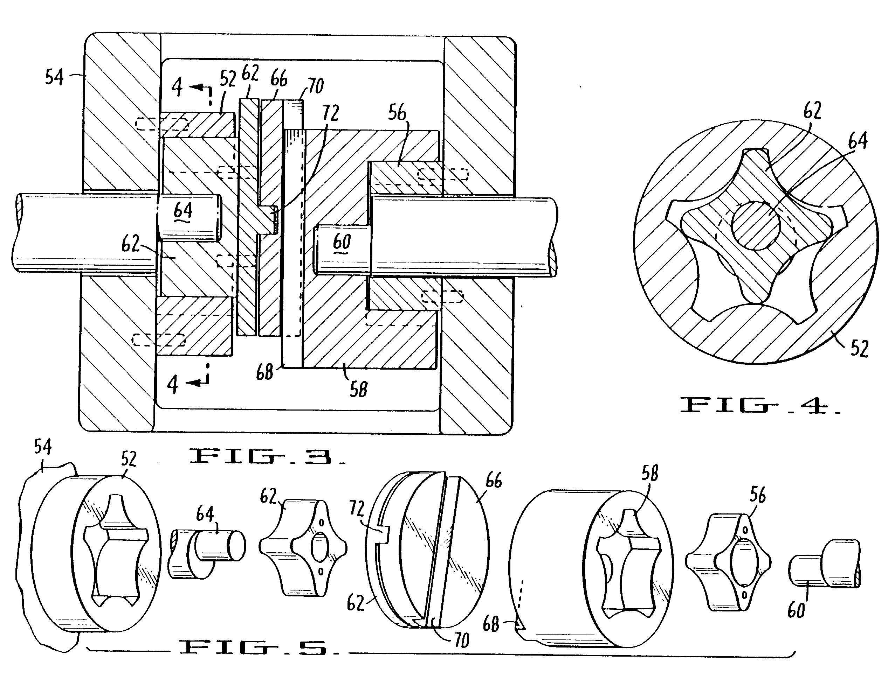

Referring to Figs. 3 - 5, a differential of the edge nutating type is shown. This figure illustrates a four to five tooth nutator, but any number of gear teeth can be used. Gear 52 is affixed rigidly to Case 54; Gear 52 has X+Y teeth (in this example, five teeth). Gear 56 is affixed rigidly to Case 54; Gear 56 has X teeth (in this drawing, four teeth).

Gear 58 is cammed relative to Gear 56 by Axle Cam 60; Gear 58 in this example has five teeth. Gear 62 is cammed relative to Gear 52 by Axle Cam 64; Gear 62 in this example has four teeth.

Plate 66 is a cross-connector. Plate 66 has two grooves cut on opposite sides, so that one groove is perpendicular to the other groove. A tongue 68 on Gear 58 slides in a groove 70 in Plate 66. A tongue 72 on Gear 62 slides in the opposite groove on Plate 66.

Case 54 can be driven by a spur gear, a ring gear, a sprocket, or other suitable means. If Axle Cam 64 is retarded or slowed down relative to Case 54, Axle Cam 64 will move Gear 62 relative to Gear 52. Gear 62 will rotate in reverse direction to Axle Cam 64. Gear 62 will rotate Plate 66 by turning and sliding simultaneously in its groove. Plate 66 will move Gear 58 relative to Gear 56 by turning and sliding in the groove with Gear 58. Gear 58 will allow Axle Cam 60 to move opposite Axle Cam 64. Axle Cam 60 will then turn in a forward direction and rotate faster than Case 54.

If Axle Cam 60 loses its input differential torque, Axle Cam 60 will not rotate and Gear 58 will not rotate relative to Axle Cam 60. Gear 58 will not rotate relative to Gear 56, and the differential will lock up and work as a limited slip differential.

These differentials can be constructed by using gear sets from any of the three types of nutating gears with a second gear set of the same or different types of nutating gears. Example: a face nutating gear set can be connected with a modified cross-connector to an edge nutating gear set to form a limited slip differential.

A further modification can be made where the two nutating gear sets used are identical in configuration. That is, if the nutated member on both sides is the gear with the smaller number of teeth or the larger number of teeth respectively, a reversing unit is placed between the nutating halves to form a differential.

## Claims

1. A limited slip differential comprising a driving member (14, 54), two driven shafts (11, 12), and a pair of nutating drive trains of which one connects the driving member (14) to each driven shaft (11, 12), each drive train having an input gear (26, 44, 52, 56) rotatable about the axis of the driven shaft (11, 12) and attached to the driving member (14), a cam (16, 34, 60, 64) connected to the driven shaft (11, 12) and a nutating gear (24, 42, 52, 56) connected between the input gear (26, 44) and the cam (16, 34, 60, 64), wherein each of the nutating drive trains has a first gear (26, 42, 52, 58) with a larger number of teeth and a second gear (24, 44, 56, 62) with a fewer number of teeth, the first gear (42, 58) of one drive train and the second gear (24, 62) of the other drive train nutate, and the nutating gears (24, 42, 58, 62) of the drive trains are rotatably interconnected to permit the nutating gears (24, 42, 58, 62) to nutate with respect to each other when the shafts (11, 12) rotate in opposite directions.

2. A limited slip differential according to Claim 1 wherein the two drive trains are face nutating cam operated gear sets.

3. A limited slip differential according to Claim 1 wherein the two drive trains are edge nutating cam operated gear sets.

4. A limited slip differential according to Claim 1 wherein the two drive trains are elliptical cam operated gear sets.

## Patentansprüche

1. Differential begrenzten Schlupfes mit einem Antriebsbauteil (14,54), zwei angetriebenen Wellen (11,12)und einem Paar taumelnder Antriebsvorgelege, von denen eins das Antriebsbauteil (14) mit jeder angetriebenen Welle (11,12) verbindet, wobei jedes Antriebsvorgelege ein Eingangszahnrad (26,44,52, 56) aufweist, welches um die Achse der angetriebenen Welle (11,12) rotierbar ist und an dem Antriebsbauteil (14) befestigt ist, mit einer Nockenscheibe (16,34,60,64),welche mit der angetriebenen Welle (11,12) verbunden ist und einem taumelnden Zahnrad (24,42,52,56), welches zwischen dem Eingangszahnrad (26,44) und der Nockenscheibe (16,34,60,64) befestigt ist, worin jedes der taumelnden Antriebsvorgelege ein erstes Zahnrad (26,42,52,58) mit einer größeren Anzahl von Zähnen und ein zweites Zahnrad (24,44,56,62) mit einer geringeren Anzahl von Zähnen aufweist, wobei das erste Zahnrad (42,58) von einem Antriebsvorgelege und das zweite Zahnrad (24,62) von dem anderen Antriebsvorgelege taumelt und die taumelnden Zahmräder (24,42,58,62) der Antriebsvorgelege rotierbar untereinander verbunden sind, um den taumelnden Zahnrädern (24,42,58,62) das Taumeln in Bezug zueinander zu gestatten, wenn die Wellen (11,12) in entgegengesetzten Richtungen rotieren.

2. Differential begrenzten Schlupfes nach Anspruch 1, worin die beiden Antriebsvorgelege um die Stirnfläche taumelnde, durch Nockenscheiben betriebene Zahnradsätze sind.

3. Differential begrenzten Schlupfes nach Anspruch 1, worin die beiden Amtriebsvorgelege um die Kanten taumelnde, durch Nockenscheiben betriebene Zahnradsätze sind.

4. Differential begrenzten Schlupfes nach Anspruch 1, worin die beiden Antriebsvorgelege elliptische, durch Nockenscheiben betriebene Zahnradsätze sind.

## Revendications

1. Différentiel à glissement limité comportant un élément de commande (14, 54), deux axes de commande (11, 12) et une paire de trains de commande oscillatoire dont l'un relie l'élément de commande (14) à chaque axe commandé (11, 12), chaque train de commande comportant un engrenage d'entrée (26, 44, 52, 56) admettant la rotation autour de l'axe de l'axe commandé (11, 12) et attaché à l'élément de commande (14), une came (16, 34, 60, 64 reliée à l'axe commandé (11, 12) et un engrenage oscillatoire (24, 42, 52, 52) relié entre l'engrenage d'entrée (26, 44) et la came (16, 34, 60, 64), dont chacun des trains de commande oscillatoire prévoit un premier engrenage (236, 42, 52, 58) ayant un nombre supérieur de dents et un deuxième engrenage (24, 762) ayant un nombre inférieur de dents, le premier engrenage (42, 58) d'un train de commande et le deuxième engrenage (24, 62) de l'autre train de commande oscillent, et les engrenages oscillatoires (234, 42, 58, 62) des trains de commande sont reliés de façon rotative de façon à permettre aux engrenages oscillatoires (24, 42, 58, 62) d'osciller l'un par rapport à l'autre lorsque lors de la rotation des axes (11, 12) en sens inverse.

2. Différentiel à glissement limité selon la revendication 1, dont les deux trains de commande sont sous forme de jeux d'engrenages à fonctionnement par came oscillatoire frontale.

3. Différentiel à glissement limité selon la revendication 1, dont les deux trains de commande sont sous forme de jeux d'engrenages à fonctionnement par came oscillatoire périphérique.

4. Différentiel à glissement limité selon la revendication 1, dont les dont les deux trains de commande sont sous forme de jeux d'engrenages à fonctionnement par came elliptique.
